# EUROPÄISCHE PATENTSCHRIFT

(11) **EP 1 243 838 B1**
(45) Veröffentlichungstag und Bekanntmachung des Hinweises auf die Patenterteilung: **26.11.2003**
(21) Anmeldenummer: 02003491.4
(22) Anmeldetag: 15.02.2002
(51) Int. Cl.: F16L 33/04, F16L 23/08

(54) **Spannbare Schelle**
Tensionable clamp
Collier de serrage

(30) Priorität: 21.03.2001 DE 10113728
(43) Veröffentlichungstag der Anmeldung: 25.09.2002
(73) Patentinhaber: Rasmussen GmbH, 63477 Maintal (DE)
(72) Erfinder: Barbett, Wolfgang, 46414 Rhede (DE); Krüger, Manfred, 63654 Büdingen (DE); Stichel, Willi, 63477 Maintal (DE); Wachter, Gerhard, 63654 Büdingen (DE)
(74) Vertreter: Knoblauch, Andreas, Dr.-Ing.

(56) Entgegenhaltungen:
- EP-A- 1 079 164
- US-A- 3 584 352
- US-A- 6 145 896

## Beschreibung

Die Erfindung bezieht sich auf eine spannbare Schelle mit einem zu einem unterbrochenen Ring gebogenen Schellenband, das auf seinem einen Endabschnitt eine erste Spannbacke und auf seinem anderen Endabschnitt eine zweite Spannbacke aufweist, wobei wenigstens die erste Spannbacke als sich quer zum Schellenband erstreckender Blechstreifen ausgebildet ist, und mit einer die Spannbacken zum Spannen des Schellenbandes verbindenden Schraube, die mit einem Stützelement zur Abstützung an der einen Spannbacke verschraubt und mit einem weiteren Stützelement zur Abstützung an der anderen Spannbacke verbunden ist.

Eine Schelle dieser Art ist beispielsweise aus der DE 34 04 739 C1 bekannt. Die Blechstreifen bilden eine radial nach außen gerichtete Wölbung. Durch die Wölbung ist die Spannschraube hindurchgeführt. Sie stützt sich einerseits mit ihrem Kopf und andererseits mit einer Mutter an den voneinander abgekehrten Rändern der Spannbacken ab. Der Schraubenkopf und die Mutter bilden hierbei die Stützelemente. Die mit den Rändern der Spannbacken zusammenfallenden Querebenen verlaufen parallel, und bevor die Schelle fest gespannt ist, d.h. ihren kleinsten Durchmesser aufweist, verlaufen diese Ebenen auch parallel zu den an den Rändern der Spannbacken anliegenden Stützflächen der Stützelemente. Diese Stützflächen liegen daher zunächst nahezu am gesamten Rand der Spannbacken an. Mit zunehmender Annäherung der Spannbacken beim Festziehen der Schraube schließen die Stützränder der Spannbacken schließlich einen spitzen Winkel miteinander ein, wobei die radial äußeren Enden der Spannbacken näher beieinander liegen als die radial inneren Enden. Die Stützelemente liegen dann nur noch an den radial inneren Enden der Wölbungen der Spannbacken an. Hierbei besteht die Gefahr, daß die Stützelemente, wenn sie nicht mit einem übermäßig großen Durchmesser ausgebildet werden, in die Wölbungen der Spannbacken eindringen und diese aufweiten, wenn hohe Spannkräfte auftreten, wie bei einer Rohrkupplung. Man hat daher auch schon vorgeschlagen, diese Spannbakken so zu formen, daß die Ränder der Wölbungen in nahezu radialen Querebenen der Schelle liegen. Bei dieser Ausbildung stützen sich die Stützflächen der Stützelemente in der Anfangsphase des Spannvorgangs bei aufgeweiteter Schelle zunächst nur an den radial äußeren Enden der Spannbacken ab, um sich schließlich mit zunehmender Spannkraft beim Zusammenziehen der Schelle vollständig an den Stützrändern der Stützelemente anzulegen. In der Anfangsphase des Spannvorgangs wird hierbei jedoch ein hohes Biegemoment auf die Spannbacken ausgeübt, insbesondere, wenn der Durchmesser der Rohre ihren Nenndurchmesser überschreitet und daher schon von Anfang an eine hohe Spannkraft aufgebracht werden muß.

Das hohe Biegemoment kann zu einer Verformung der Spannbacken führen. Sie müßten daher aus dickerem oder festerem Material hergestellt werden, was kostspielig ist.

Der Erfindung liegt die Aufgabe zugrunde, eine Schelle der eingangs genannten Art anzugeben, bei der wenigstens die eine Spannbacke mit höchstens gleichem Materialaufwand zumindest ebenso hoch belastbar ist, ohne sich zu verformen.

Erfindungsgemäß ist diese Aufgabe dadurch gelöst, daß sich die erste Spannbacke zwischen dem Schaft der Schraube und dem Schellenband, am Schaft und Schellenband anliegend, hindurch erstreckt und der eine Rand der ersten Spannbacke unterhalb des Schraubenschafts einen Vorsprung zum Eingreifen in eine den Schraubenschaft umgebende, eine außen umlaufende Wand aufweisende Vertiefung in einer der ersten Spannbacke zugekehrten Seite des einen Stützelements bildet.

Bei dieser Lösung liegt die Berührungsstelle zwischen dem Rand der ersten Spannbacke und dem an ihm anliegenden Stützelement über die gesamte Spannphase von der kleinsten bis zur größten Spannkraft stets relativ nahe am Schellenband. Da der Abstand zwischen dieser Berührungsstelle und dem Schellenband den Hebelarm des auf die Spannbacke ausgeübten Biegemoments bestimmt, ist das Biegemoment entsprechend gering. Dementsprechend ist auch die Gefahr einer Verbiegung oder Verformung der Spannbacke, selbst bei der höchsten Spannkraft, sehr gering. Das Stützelement kann nicht in die erste Spannbacke eindringen, da eine radial nach außen gerichtete Wölbung dieser Spannbacke entfällt. Dennoch kann sich dieses Stützelement nicht radial von der ersten Spannbacke entfernen, weil es durch den in die Vertiefung eingedrungenen Vorsprung des Stützrandes der Spannbacke daran gehindert wird.

Ferner kann dafür gesorgt sein, daß der radiale Abstand des Vorsprungs vom Spannband wenigstens gleich der Dikke der Wand der Vertiefung ist. Dies ergibt einen sehr geringen Abstand zwischen dem das Ringteil aufweisenden Stützelement und dem Spannband. Dementsprechend liegt auch die Berührungsstelle zwischen diesem Stützelement und der ersten Spannbacke radial sehr nahe am Spannband. Das durch dieses Stützelement auf die erste Spannbacke ausgeübte Biegemoment ist daher entsprechend gering.

Vorzugsweise ist vorgesehen, daß der Blechstreifen der ersten Spannbacke mit einer radial nach innen zum Schellenband hin gerichteten Wölbung zur Aufnahme des Schaftes der Schraube ausgebildet ist. Diese Ausbildung hat den Vorteil, daß sich neben der nach innen gerichteten Wölbung zwei schmalere nach außen gerichtete Wölbungen ergeben und alle Wölbungen zu einer Versteifung der ersten Spannbacke in Richtung der auf sie ausgeübten Spannkraft beitragen. Außerdem wird die Schraube in der nach innen gerichteten Wölbung seitlich geführt.

Eine weitere vorteilhafte Ausgestaltung kann darin bestehen, daß der Blechstreifen der ersten Spannbacke mit seiner Breitseite weitgehend parallel auf dem Schellenband aufliegt, dagegen ein mit dem Vorsprung versehener, sich quer zum Schellenband erstreckender schmaler Randbereich des Blechstreifens, einschließlich des Vorsprungs, einen radialen Abstand vom Schellenband aufweist, der wenigstens der Dicke der Wand der Vertiefung entspricht. Hierbei liegt der Blechstreifen nahezu vollständig über seine gesamte Länge, bis auf den schmalen Randbereich, am Schellenband an, so daß man mit wenig Material für die erste Spannbacke auskommt.

Die Vertiefung kann in einem Ringteil des einen Stützelements ausgebildet sein. Das Ringteil kann einstückig mit dem Schraubenkopf oder der Mutter ausgebildet sein. Vorzugsweise ist jedoch dafür gesorgt, daß das Ringteil mit dem Schraubenschaft lösbar oder fest verbunden ist und am Kopf der Schraube anliegt. Die lösbare Verbindung hat den Vorteil, daß das Ringteil ähnlich wie eine Unterlegscheibe wirkt, zuvor jedoch so fest, z.B. durch einen schwachen Reibschluß, mit dem Schraubenschaft verbunden sein kann, daß das Ringteil sich vor oder bei der Montage nicht löst und somit nicht verlorengehen kann. Die feste Verbindung hätte den Vorteil, daß ein Zusammenbau von Schraube und Ringteil bei der Montage der Schelle entfällt.

Um die lösbare Verbindung zu erreichen, kann dafür gesorgt sein, daß der Boden der Vertiefung radial nach innen bis zur Anlage am Schraubenschaft verformt ist. Hierbei kann die Anlage eine schwache reibschlüssige Verbindung bewirken.

Die Erfindung und ihre Weiterbildung werden nachstehend anhand der beiliegenden Zeichnung bevorzugter Ausführungsbeispiele näher beschrieben. Darin stellen dar:
- Fig. 1: eine perspektivische Ansicht eines ersten Ausführungsbeispiels einer erfindungsgemäßen Schelle,
- Fig. 2: eine Seitenansicht der Schelle nach Fig. 1,
- Fig. 3: eine andere Seitenansicht der Schelle nach Fig. 1, teilweise im Radialschnitt,
- Fig. 4: einen Teil der Schelle nach Fig. 1, teilweise im Schnitt,
- Fig. 5: eine Rückansicht der einen Spannbacke der Schelle nach Fig. 1,
- Fig. 6: eine Seitenansicht der Spannbacke nach Fig. 5,
- Fig. 7: eine Vorderansicht der Spannbacke nach Fig. 5,
- Fig. 8: eine Draufsicht der Spannbacke nach Fig. 5,
- Fig. 9: eine perspektivische Ansicht der Spannbacke nach Fig. 5 in etwas kleinerem Maßstab,
- Fig. 10: eine Seitenansicht der die Spannbacken verbindenden Schraube der Schelle nach Fig. 1,
- Fig. 11: den Schnitt XI-XI der Fig. 10,
- Fig. 12: eine perspektivische Ansicht der Schraube nach Fig. 10,
- Fig. 13: eine Rückansicht einer Abwandlung der einen Spannbacke einer erfindungsgemäßen Schelle,
- Fig. 14: eine Seitenansicht der Spannbacke nach Fig. 13,
- Fig. 15: eine Vorderansicht der Spannbacke nach Fig. 13,
- Fig. 16: eine Draufsicht der Spannbacke nach Fig. 13 und
- Fig. 17: eine perspektivische Ansicht der Spannbacke nach Fig. 13 in kleinerem Maßstab.

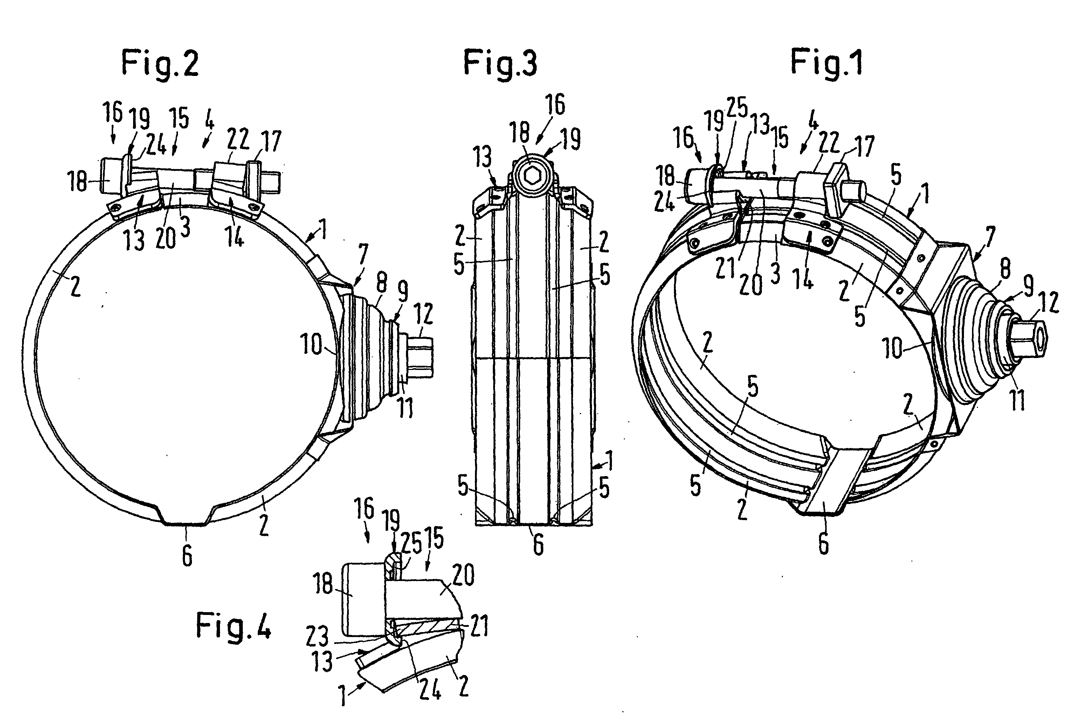

Die Schelle nach den Fig. 1 bis 12 ist eine Halterungsschelle für Rohre. Sie kann aber auch als Rohrkupplung verwendet werden.

Die dargestellte Schelle hat ein etwa ringförmig gebogenes Spannband 1 mit an den axialen Enden schräg nach innen umgebogenen Randbereichen 2 zur Abstützung am Rohrumfang.

Das Schellenband 1 ist in Umfangsrichtung unterbrochen, wobei sich seine Endabschnitte überlappen. Der eine Endabschnitt 3 ist etwas radial nach innen versetzt. Das Schellenband 1 ist ferner in der Nähe seiner Enden mit einem Schraubverschluß 4 zum Spannen der Schelle versehen. In Umfangsrichtung umlaufende Versteifungssicken 5 und die Randbereiche 2 enden an einem unprofilierten Abschnitt 6 des Schellenbands, der somit leicht biegsam bleibt und als Gelenk wirkt. Auf dem Spannband 1 ist ferner ein Halterungssockel 7 mit einem kuppelartigen Vorsprung 8 durch Punktschweißungen (Buckelschweißungen) befestigt. In dem aus Blech geformten Sockel 7 ist ein Gummiteil 9 formschlüssig befestigt. Das Gummiteil 9 liegt mit seinem radial inneren Ende 10 am Schellenband 1 an. Das andere Ende 11 des Gummiteils 9 ragt aus dem Sockel 7 heraus. In dem Gummiteil 9 ist eine außen mehrkantige Hülse 12 mit Innengewinde befestigt. In das Innengewinde wird eine Gewindestange eingeschraubt, die mit einem entsprechenden Anschlußstück an einem Gebäudeteil verbunden wird, so daß die Schelle mit dem durch sie hindurchgeführten Rohr an dem Gebäudeteil aufgehängt werden kann.

Der Schraubverschluß 4 besteht aus zwei Spannbacken 13 und 14 und einer Schraube 15 mit einem Stützelement 16 und einem Stützelement 17.

Die Spannbacken 13 und 14 sind aus einem sich quer zum Schellenband 1 erstreckenden Blechstreifen geformt und jeweils auf einem Endabschnitt des Schellenbands 1 durch Punktschweißungen, hier Buckelschweißungen, befestigt.

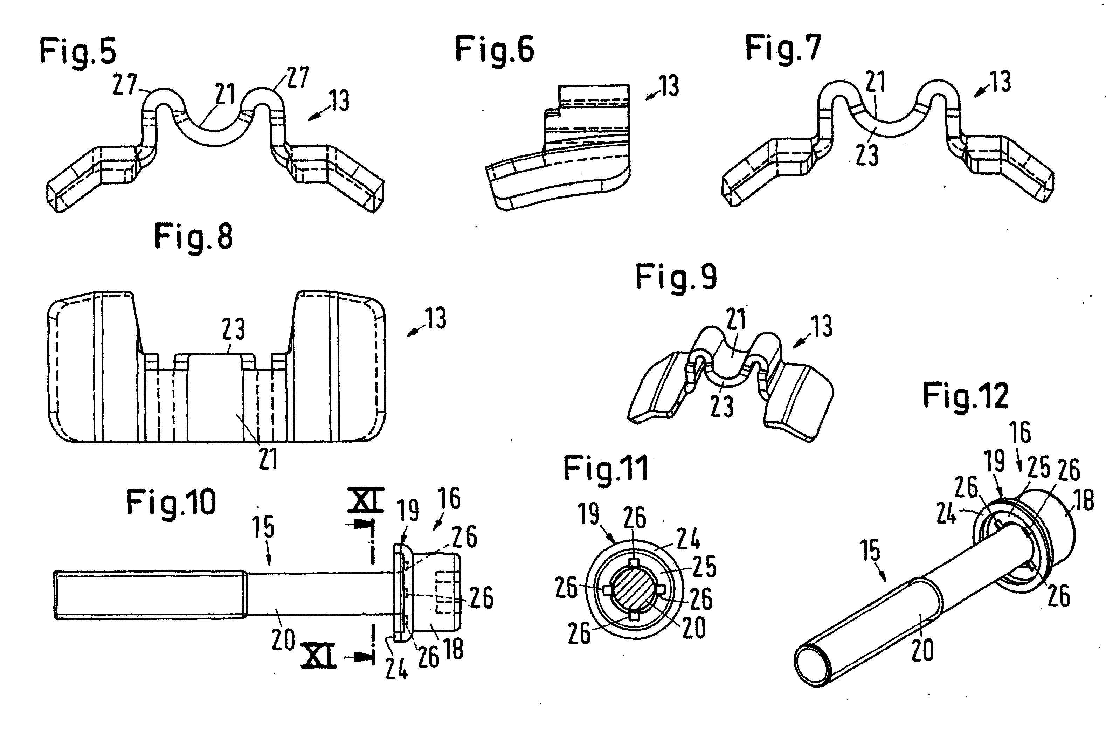

Das Stützelement 16 besteht aus einem Kopf 18 der Schraube 15 und einem Ringteil 19. Das Stützteil 17 ist als Mutter ausgebildet und auf den mit Gewinde versehenen Schaft 20 der Schraube 15 geschraubt. Die Stützteile 16 und 17 stützen sich an den voneinander abgekehrten Rändern der Spannbacken 13 und 14 ab. Während die Spannbacke 13 eine radial nach innen gerichtete Wölbung 21 aufweist (siehe insbesondere Fig. 4 und 5), ist die Spannbacke 14 mit einer radial nach außen gerichteten Wölbung 22 versehen. In der Wölbung 21 liegt der Schaft 20 der Schraube 15 seitlich geführt auf. Dagegen ist er unter der radial nach außen gerichteten Wölbung 22 der anderen Spannbacke 14 hindurchgeführt. Hierbei ist die Spannbacke 13 zwischen dem Schaft 20 der Schraube 15 und dem Schellenband 1, am Schaft 20 und Schellenband 1 anliegend, hindurchgeführt. Der dem Stützteil 16 zugekehrte Rand der Spannbacke 13 ist unterhalb des Schraubenschafts 20 mit einem Vorsprung 23 versehen. Der Vorsprung 23 greift in eine den Schraubenschaft 20 umgebende Vertiefung 25 in der der Spannbacke 13 zugekehrten Seite des Stützelements 16 ein.

Die Vertiefung 25 ist durch eine außen umlaufende Wand 24 begrenzt und im Ringteil 19 des Stützelements 16 ausgebildet. Die Dicke der Wand 24 entspricht höchstens oder etwa dem Abstand des Vorsprungs 23 vom Spannband 1. Dies trägt dazu bei, daß der Vorsprung 23 in möglichst geringem radialen Abstand vom Spannband vorgesehen sein kann. Dementsprechend gering ist das beim Spannen der Schelle auf die Spannbacke 13 ausgeübte Biegemoment und die Gefahr einer Verbiegung der Spannbacke 13.

Das Ringteil 19 ist mit dem Schraubenschaft 20 lösbar verbunden und liegt am Kopf 18 der Schraube 15 an. Die lösbare Verbindung von Ringteil 19 und Schraubenschaft 20 wird dadurch erreicht, daß in den Boden der Vertiefung 25 an seinem radial inneren Rand kleinere axiale Vertiefungen 26 eingedrückt werden, wobei das Material des Bodens radial nach innen verformt und gegen den Schaft 20 der Schraube 15 gedrückt wird (vgl. Fig. 11). Die Tiefe der Vertiefungen 26 ist nur so gering gewählt, daß das dabei radial nach innen als Vorsprung gegen den Schraubenschaft 20 gedrückte Material des Bodens der Vertiefung 25 nicht allzu fest anliegt, so daß sich diese leicht reibschlüssige Verbindung beim Spannen der Schraube wieder löst und sich das Ringteil 19 dabei wie eine Unterlegscheibe nicht relativ zur Spannbacke 13 dreht. Die Tiefe der Vertiefungen 26 kann jedoch tiefer gewählt und dadurch mehr Material nach innen gedrückt werden, so daß das Ringteil 19 unverdrehbar auf dem Schaft 20 festsitzt, wenn dies erwünscht ist. In beiden Fällen bleibt das Ringteil 19 zumindest bis zur endgültigen festen Verspannung der Schelle unverlierbar auf dem Schaft 20 der Schraube 15 sitzen, um die Montage der Schraube 15 samt Ringteil 19 zu erleichtern.

Die Länge des Vorsprungs 23 ist in Umfangsrichtung der Schelle mindestens gleich der Tiefe der Vertiefung 25. Dadurch ist sichergestellt, daß sich das Stützteil 16 beim Spannen der Schraube 15 in jeder Phase des Spannvorgangs zumindest dann, wenn der Vorsprung 23 auch nur geringfügig länger als die Tiefe der Vertiefung 25 ist, um so näher beim Spannband 1 an der Spannbacke 13 abstützt, je kleiner der Bogen ist, den der Vorsprung 23 um den Mittelpunkt der Wölbung 21 herum bildet. Der radiale Abstand des Vorsprungs 23 vom Spannband 1, vgl. insbesondere Fig. 4, kann dadurch entsprechend gering gehalten werden, so daß sich das Stützteil 16 relativ nahe bei dem Spannband 1, d.h. mit geringem Hebelarm, der das auf die Spannbacke 13 ausgeübte Biegemoment mitbestimmt, abstützt und das Biegemoment und demzufolge die Gefahr einer Verformung der Spannbacke 13 beim Festziehen der Schraube 15 entsprechend gering ist. Durch die radial nach innen gerichtete Wölbung 21 ergeben sich darüber hinaus seitlich neben der Wölbung 21 kleinere radial nach außen gerichtete Wölbungen 27, die nach Art von Versteifungssicken ebenso wie die Wölbung 21 eine höhere Biegesteifigkeit der Spannbacke 13 bewirken. Darüber hinaus tragen die Wölbungen 27 zur seitlichen Führung der Schraube 15 bei. Die Schraube 15 kann daher mit dem Stützteil 16 in Umfangsrichtung der Schelle in der Wölbung 21 durch manuelles Zusammendrükken des Spannbands 1 gegen seine Federkraft bis über das freie Ende des Vorsprungs 23 hinaus entlanggeführt, dann radial nach innen gedrückt und nach Freigabe des Schellenbands 1 durch seine Federkraft mit der Wand 24 unter dem Vorsprung 23 eingehängt werden.

Alternativ ist es auch möglich, die Schraube 15 umgekehrt herum unter der Spannbacke 22 hindurch einzuführen, bis der Kopf 18 an der Spannbacke 22 anliegt, und die Mutter 17 zusammen mit dem Ringteil 19 als Stützelement auf seiten der Spannbacke 13 zu verwenden, ähnlich wie das Stützelement 16.

In beiden Fällen verhindert der in die Vertiefung 25 eingreifende Vorsprung 23 der Spannbacke 13 ein unbeabsichtigtes radiales Aushängen des Stützteils im gespannten Zustand der Schelle.

Alternativ zu dem dargestellten Ausführungsbeispiel ist es auch möglich, eine entsprechende Vertiefung 25 unmittelbar in der der Spannbacke 13 zugekehrten Seite des Schraubenkopfes 18 oder, wenn die Schraube 15 umgekehrt montiert wird, der Mutter 17 auszubilden. Gegebenenfalls würde die separate Ausbildung des Ringteils 19 entfallen. Die separate Ausbildung des Ringteils 19 hat jedoch den Vorteil, daß eine herkömmliche Schraube 15 oder Mutter 17 verwendet werden kann.

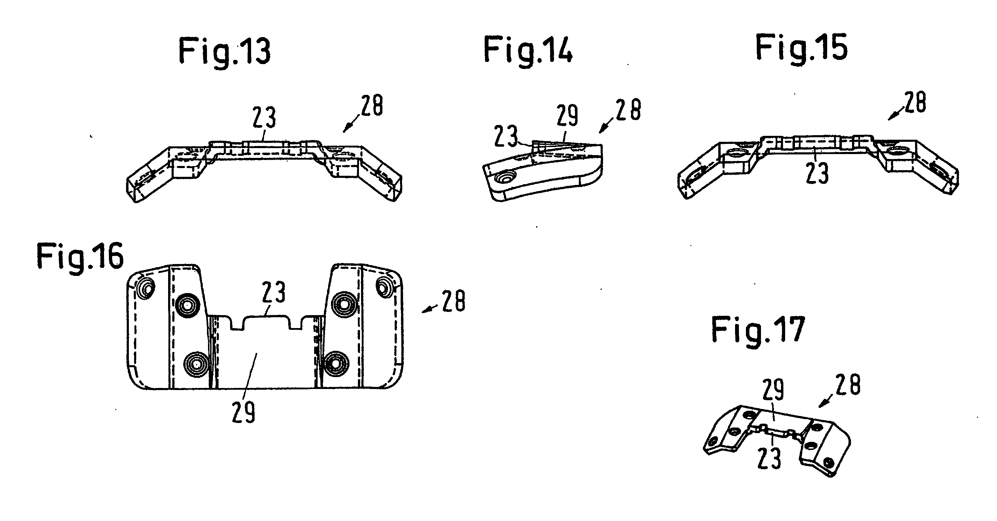

Die Fig. 13 bis 17 stellen eine gegenüber der Spannbakke 13 nach den Fig. 1 bis 9 abgewandelte Spannbacke 28 dar, die sich von der des ersten Ausführungsbeispiels darin unterscheidet, daß ihr Blechstreifen mit seiner Breitseite weitgehend parallel auf dem Schellenband 1 aufliegt, dagegen ein mit dem Vorsprung 23 versehener, sich quer zum Schellenband 1 erstreckender schmaler Randbereich 29 des Blechstreifens, einschließlich des Vorsprungs 23, einen radialen Abstand vom Schellenband 1 aufweist, der wenigstens oder etwa der Dicke der Wand 24 der Vertiefung 25 entspricht, ähnlich wie dies bei der Wölbung 21 gemäß Fig. 4 der Fall ist. Bei dieser Ausbildung der Spannbacke 28 kommt man mit weniger Material aus, weil die Wölbungen 21 und 27 gegenüber dem ersten Ausführungsbeispiel entfallen, während die Steifigkeit der Spannbacke allenfalls etwas geringer ist.

Eine weitere Abwandlung des ersten Ausführungsbeispiels kann darin bestehen, daß auch die Spannbacke 14 ebenso wie die Spannbacke 13 oder wie die Spannbacke 28 nach den Fig. 13 bis 17 ausgebildet ist.

Anstelle des in dem Sockel 7 vorgesehenen Gummiteils 10, das dazu dient, die Übertragung von Schallschwingungen aus dem Rohr in das Gebäude, an dem die Halterungsschelle befestigt ist, zu dämpfen, kann die Schelle auch auf ihrer Innenseite mit einer Gummimuffe versehen sein.

Wenn die Schelle nicht als Halterungsschelle, sondern nur als Rohrkupplung verwendet werden soll, kann der Sockel 7 völlig entfallen, wobei dann wiederum auf der Innenseite des Schellenbands 1 eine Gummimuffe angeordnet wird, um die Verbindungsstelle zwischen den Rohrenden abzudichten.

## Patentansprüche

1. Spannbare Schelle mit einem zu einem unterbrochenen Ring gebogenen Schellenband (1), das auf seinem einen Endabschnitt eine erste Spannbacke (13; 28) und auf seinem anderen Endabschnitt eine zweite Spannbacke (14) aufweist, wobei wenigstens die erste Spannbacke (13; 28) als sich quer zum Schellenband (1) erstrekkender Blechstreifen ausgebildet ist, und mit einer die Spannbacken (13, 14; 28, 14) zum Spannen des Schellenbandes (1) verbindenden Schraube (15), die mit einem Stützelement (17) zur Abstützung an der einen Spannbacke (14) verschraubt und mit einem weiteren Stützelement (16) zur Abstützung an der anderen Spannbacke (13; 28) verbunden ist, **dadurch gekennzeichnet, daß** sich die erste Spannbacke (13; 28) zwischen dem Schaft (20) der Schraube (15) und dem Schellenband (1), am Schaft und Schellenband anliegend, hindurch erstreckt und der eine Rand der ersten Spannbacke (13; 28) unterhalb des Schraubenschafts (20) einen Vorsprung (23) bildet, der in eine den Schraubenschaft (20) umgebende, eine außen umlaufende Wand (24) aufweisende Vertiefung (25) in einer der ersten Spannbakke (13; 28) zugekehrten Seite des einen Stützelements (16) eingreift.

2. Schelle nach Anspruch 1, **dadurch gekennzeichnet, daß** der radiale Abstand des Vorsprungs (23) vom Spannband (1) wenigstens gleich der Dicke der Wand (24) der Vertiefung (25) ist.

3. Schelle nach Anspruch 1 oder 2, **dadurch gekennzeichnet, daß** der Blechstreifen der ersten Spannbacke (13) mit einer radial nach innen zum Schellenband (1) hin gerichteten Wölbung (21) zur Aufnahme des Schaftes (20) der Schraube (15) ausgebildet ist.

4. Schelle nach Anspruch 1, **dadurch gekennzeichnet, daß** der Blechstreifen der ersten Spannbacke (28) mit seiner Breitseite weitgehend parallel auf dem Schellenband (1) aufliegt, dagegen ein mit dem Vorsprung (23) versehener, sich quer zum Schellenband (1) erstreckender schmaler Randbereich (29) des Blechstreifens, einschließlich des Vorsprungs (23), einen radialen Abstand vom Schellenband (1) aufweist, der wenigstens der Dicke der Wand (24) der Vertiefung (25) entspricht.

5. Schelle nach Anspruch 3 oder 4, **dadurch gekennzeichnet, daß** die Vertiefung (25) in einem Ringteil (19) des einen Stützelements (16) ausgebildet ist.

6. Schelle nach Anspruch 5, **dadurch gekennzeichnet, daß** das Ringteil (19) mit dem Schraubenschaft (20) lösbar oder fest verbunden ist und an einem Kopf (18) der Schraube (15) anliegt.

7. Schelle nach Anspruch 6, **dadurch gekennzeichnet, daß** der Boden der Vertiefung (25) radial nach innen bis zur Anlage am Schraubenschaft (20) verformt ist.

8. Schelle nach einem der Ansprüche 1 bis 7, **dadurch gekennzeichnet, daß** die Länge des Vorsprungs (23) in Umfangsrichtung der Schelle mindestens gleich der Tiefe der Vertiefung (25) ist.

## Claims

1. A tensionable clamp having a clamp band (1) which is bent into an incomplete ring, which, on the one end portion thereof, has a first clamping jaw (13; 28) and on the other end portion thereof has a second clamping jaw (14), wherein at least the first clamping jaw (13; 28) is in the form of a metal strip which extends transversely to the clamp band (1), and having a bolt (15) which connects the clamping jaws (13, 14; 28, 14) for clamping the clamp band (1), the bolt being screwed with a support member (17) for support to the one clamping jaw (14), and being connected to a further support member (16) for support to the other clamping jaw (13; 28), **characterised in that** the first clamping jaw (13; 28) extends between the barrel (20) of the bolt (15) and the clamp band (1), resting on the barrel and the clamp band, and the one edge of the first clamping jaw (13; 28) under the barrel of the bolt (20) forms a projection (23) which engages into a recess (25) with an outward peripheral wall (24) surrounding the barrel of the bolt (20), in a side of the one support member (16) which faces the first clamping jaw (13; 28).

2. A clamp according to Claim 1, **characterised in that** the radial distance of the projection (23) from the clamp band (1) is at least equal to the thickness of the wall (24) of the recess (25).

3. A clamp according to Claim 1 or Claim 2, **characterised in that** the metal strip of the first clamping jaw (13) is formed with a convexity (21) which is directed radially inwardly towards the clamp band (1) for receiving the barrel (20) of the bolt (15).

4. A clamp according to Claim 1, **characterised in that** the metal strip of the first clamping jaw (28) rests with its broad side largely parallel to the clamp band (1), but a narrow peripheral region (29) of the metal strip which extends transversely to the clamp band (1) and which is provided with the projection (23), inclusive of the projection (23), has a radial distance from the clamp band (1) which is at least equal to the thickness of the wall (24) of the recess (25).

5. A clamp according to Claim 3 or Claim 4, **characterised in that** the recess (25) is formed in an annular portion (19) of the one support member (16).

6. A clamp according to Claim 5, **characterised in that** the annular portion (19) is detachably or fixedly connected to the barrel (20) of the bolt, and bears against a head (18) of the bolt (15).

7. A clamp according to Claim 6, **characterised in that** the base of the recess (25) is shaped radially inwards until it bears against the barrel (20) of the bolt.

8. A clamp according to Claims 1 to 7, **characterised in that** the length of the projection (23) in the peripheral direction of the clamp is at least equal to the depth of the recess (25).

## Revendications

1. Collier de serrage avec une bague de collier (1) courbée en direction d'une bague interrompue qui présente sur sa partie d'extrémité une première mâchoire de serrage (13 ; 28) et sur son autre partie d'extrémité, une seconde mâchoire de serrage (14), moyennant quoi au moins la première mâchoire de serrage (13 ; 28) a la forme d'un ruban de tôle s'étendant perpendiculairement à la bague de collier (1), et avec une vis (15) reliant les mâchoires de serrage (13, 14 ; 28, 14) pour le serrage de la bague de collier (1), laquelle vis est vissée avec un élément de soutien (17) pour le soutien à ladite mâchoire (14) et est reliée à un autre élément de soutien (16) pour le soutien à l'autre mâchoire de serrage (13 ; 28), **caractérisé en ce que** la première mâchoire (13 ; 28) s'étend entre la tige (20) de la vis (15) et la bague de collier (1), en contact avec la tige et la bague de collier, et le bord de la première mâchoire (13 ; 28) forme une protubérance (23) sous la tige de vis (20) qui s'engrène dans un évidement (25) qui présente une paroi (24) faisant le tour sur l'extérieur entourant la tige de vis (20) dans un côté tourné vers la première mâchoire de serrage (13 ; 28) dudit l'élément de soutien (16).

2. Collier selon la revendication 1, **caractérisé en ce que** l'écart radial de la protubérance (23) au ruban de serrage (1) est au moins égal à l'épaisseur de la paroi (24) de l'évidement (25).

3. Collier selon la revendication 1 ou 2, **caractérisé en ce que** le ruban de tôle de la première mâchoire de serrage (13) est réalisé avec une bosse (21) dirigée vers l'intérieur de manière radiale vers la bague de collier (1) pour le logement de la tige (20) de la vis (15).

4. Collier selon la revendication 1, **caractérisé en ce que** le ruban de tôle de la première mâchoire (28) repose avec son côté large pratiquement parallèlement sur la bague de serrage (1), **en ce qu'**en revanche une zone de bord (29) étroite du ruban de tôle, y compris la protubérance (23), munie de la protubérance (23) et s'étendant perpendiculairement à la bague de collier (1) présente un écart radial de la bague de collier (1) qui correspond au moins à l'épaisseur de la paroi (24) de l'évidement (25).

5. Collier selon la revendication 3 ou 4, **caractérisé en ce que** l'évidement (25) est formé dans une partie de bague (19) dudit élément de soutien (16).

6. Collier selon la revendication 5, **caractérisé en ce que** la partie de bague (19) est reliée de manière détachable ou fixe à la tige de vis (20) et est en contact avec une tête (18) de la vis (15).

7. Collier selon la revendication 6, **caractérisé en ce que** le fond de l'évidement (25) est formé de manière radiale vers l'intérieur jusqu'à son appui sur la tige de vis (20).

8. Collier selon l'une quelconque des revendications 1 à 7, **caractérisé en ce que** la longueur de la protubérance (23) en direction circonférentielle du collier est au moins égale à la profondeur de l'évidement (25).
